# EUROPÄISCHE PATENTSCHRIFT

(11) **EP 4 046 873 B1**
(45) Veröffentlichungstag und Bekanntmachung des Hinweises auf die Patenterteilung: **23.10.2024**
(21) Anmeldenummer: 22157825.5
(22) Anmeldetag: 21.02.2022
(51) Int. Cl.: B60R 9/06, B60R 9/10

(54) **TRÄGERVORRICHTUNG FÜR EIN KRAFTFAHRZEUG**
HOLDER DEVICE FOR A MOTOR VEHICLE
DISPOSITIF DE SUPPORT POUR UN VÉHICULE AUTOMOBILE

(30) Priorität: 22.02.2021 AT 501182021
(43) Veröffentlichungstag der Anmeldung: 24.08.2022
(73) Patentinhaber: Manfred Hafele GmbH, 6531 Ried i.O. (AT)
(72) Erfinder: HAFELE, Manfred, 6542 Pfunds (AT)
(74) Vertreter: Puchberger & Partner Patentanwälte

(56) Entgegenhaltungen:
- EP-A1- 3 386 070
- US-A1- 2008 006 667
- US-A1- 2010 045 012
- US-A1- 2011 108 592
- US-A1- 2013 182 454
- US-A1- 2016 288 729

## Beschreibung

Die vorliegende Erfindung betrifft eine Trägervorrichtung für ein Kraftfahrzeug zum Befestigen wenigstens eines Fahrrades mit den Merkmalen des Oberbegriffs des Anspruchs 1 sowie ein Kraftfahrzeug mit einer solchen Trägervorrichtung.

Kraftfahrzeuge können beispielsweise Personenkraftwagen, Lastkraftwagen oder andere Fahrzeuge zur Beförderung von Personen sein. Im Folgenden soll der Stand der Technik kurz anhand von Personenkraftwagen umrissen werden. Analoges gilt allgemein für Kraftfahrzeuge.

Gattungsgemäße Trägervorrichtungen umfassen:
- wenigstens eine Befestigungsvorrichtung zur Anbindung der Trägervorrichtung an ein Personenkraftfahrzeug,
- wenigstens eine relativ zur Befestigungsvorrichtung bewegbare Aufnahmevorrichtung zur Aufnahme des wenigstens einen Fahrrads,
- wenigstens eine Führungsvorrichtung, wobei die wenigstens eine Aufnahmevorrichtung mittels der wenigstens einen Führungsvorrichtung in Richtung einer Ausziehachse der Trägervorrichtung relativ zur wenigstens einen Befestigungsvorrichtung zwischen einer Verstauposition und wenigstens einer Gebrauchsposition führbar ist.

Entsprechende Trägervorrichtungen werden mit der wenigstens einen Befestigungsvorrichtung zumeist in einem hinteren Bereich des Personenkraftfahrzeuges an der Stoßstange oder unterhalb des Fahrzeuges angebunden. Die Anbindung kann über eine Schweiß-oder Schraubverbindung beispielsweise am Chassis des Fahrzeuges erfolgen.

Über die Führungsvorrichtung kann anschließend die Aufnahmevorrichtung, welche dazu ausgebildet ist, das wenigstens eine Fahrrad aufzunehmen, aus diesem unteren oder hinteren Bereich entlang einer Fahrtrichtung des Fahrzeugs ausgezogen werden, sodass sich die Trägervorrichtung in einer Verstauposition im hinteren Bereich oder unterhalb des Fahrzeugs versteckt und bei Gebrauch in eine Gebrauchsposition über die Führungsvorrichtung überführen lässt.

Solche aus dem Stand der Technik bekannte Trägervorrichtungen gehen beispielsweise aus der DE 102010017182 B1, der DE 202015105297 U1, der EP 1876059 A1, der DE 202011109330 U1, der DE 102004057649 A1, der DE 10352644 A1, der DE 19521886 A1, der DE 202005012475 20 U1, der US 2013/182454 A1, der EP 3 386 070 A1, der US 2011/108592 A1, der US 2016/288729 A1, der US2008/006667 A1 oder der US 2010/045012 A1 hervor.

Nachteilig an solchen Trägervorrichtungen aus dem Stand der Technik ist jedoch, dass die Befestigungsvorrichtung einen relativ breiten und großen Bereich am Personenkraftfahrzeug einnimmt und dort auch eine entsprechende Halterung benötigt, sodass fahrzeugseitig ein recht großer Bereich für die Anbringung der Trägervorrichtung angepasst werden muss bzw. verlorengeht, welcher für Fahrzeugkomponenten, wie Fahrwerk, Antrieb oder Abgasanlage, erforderlich ist.

Des Weiteren ist es nachteilig, dass in Gebrauchsposition der Trägervorrichtung im hinteren Bereich des Fahrzeuges rechtwinklig davon abstehende Befestigungsvorrichtungen (welche es benötigt, um ein Fahrrad beispielsweise über Halteklauen am Rahmen zu befestigen) vorgesehen sind, welche in einer Verstauposition die freie Zugänglichkeit des Fahrzeuges beeinträchtigt, sodass beispielsweise in vielen Fällen der Kofferraum nicht mehr öffenbar oder nur schwer zugänglich ist. Dies macht es zumeist erforderlich Teile der Tragvorrichtung zu demontieren, bevor die Trägervorrichtung in eine Verstauposition übergeführt wird.

Diese Demontage von zusätzlichen Halteelementen der Trägervorrichtung macht es jedoch wieder erforderlich, diese demontierten Teile in der Verstauposition beispielsweise im Innenraum des Fahrzeuges oder an anderen Positionen zu lagern, was sich wiederum negativ auf die Bedienerfreundlichkeit für einen Anwender ausübt.

Aufgabe der vorliegenden Erfindung ist es, eine Trägervorrichtung und ein Kraftfahrzeug mit einer solchen Trägervorrichtung bereitzustellen, welche zumindest teilweise die zuvor beschriebenen Nachteile des Standes der Technik verbessern und/oder eine Bedienerfreundlichkeit erhöhen und/oder einen geringeren Platzbedarf am Kraftfahrzeug darstellt.

Diese Aufgabe wird durch eine Trägervorrichtung mit den Merkmalen des Anspruchs 1 gelöst, sowie einem Kraftfahrzeug mit einer solchen Trägervorrichtung.

Erfindungsgemäß ist somit vorgesehen, dass eine Trägervorrichtung folgendes umfasst:
- wenigstens eine Befestigungsvorrichtung zur Anbindung der Trägervorrichtung an das Kraftfahrzeug,
- wenigstens eine relativ zur Befestigungsvorrichtung bewegbare Aufnahmevorrichtung zur Aufnahme des wenigstens einen Fahrrads, und
- wenigstens eine Führungsvorrichtung, wobei die wenigstens eine Aufnahmevorrichtung mittels der wenigstens einen Führungsvorrichtung in Richtung einer Ausziehachse der Trägervorrichtung relativ zur wenigstens einen Befestigungsvorrichtung zwischen einer Verstauposition und wenigstens einer Gebrauchsposition führbar ist,
wobei die wenigstens eine Aufnahmevorrichtung mittels der wenigstens einen Führungsvorrichtung zwischen der Verstauposition und der wenigstens einen Gebrauchsposition zusätzlich durch Klappen um eine Achse quer zur Ausziehachse bewegbar ist.

Durch das Klappen um eine Achse quer zur Ausziehachse bei der Bewegung zwischen der Gebrauchsposition und der Verstauposition der wenigstens einen Aufnahmevorrichtung wird es gestattet, dass von der wenigstens einen Aufnahmevorrichtung abstehende Konstruktionselemente (welche beispielsweise sonst in einer Verstauposition die Zugänglichkeit des Kraftfahrzeuges beeinträchtigen würden) umgeklappt werden und in einer Verstauposition nunmehr in einem Heckbereich oder unter einem Kraftfahrzeug verschwinden können, wodurch eine bessere Zugänglichkeit für einen Bediener gestattet wird.

Des Weiteren ist es nun möglich, durch die Verkippung und/oder das Klappen der Trägervorrichtung die Trägervorrichtung weit effizienter und platzsparender an einem Kraftfahrzeug anzubringen, wobei die Trägervorrichtung in einer Verstauposition in einem verfügbaren Stauraum des Kraftfahrzeuges verdreht werden kann.

Eine erfindungsgemäße Vorrichtung kann auch ihren Einsatz in bereits bekannten Ausführungsvarianten des Standes der Technik, wie beispielsweise auch durch die Beschreibungseinleitung beschrieben, ihren Einsatz finden und nachträglich installiert werden.

In besonders bevorzugten Ausführungsformen kann das wenigstens eine Fahrrad beispielsweise mit arretierter Kurbel zwischen Rahmen und Kurbel des Fahrrads in der klappbare Aufnahmevorrichtung aufgenommen werden.

Vorteilhafte Ausführungsformen der Erfindung sind anhand der abhängigen Ansprüche definiert.

Vorzugsweise kann vorgesehen sein, dass wenn eine Vielzahl von Aufnahmevorrichtungen vorgesehen sind, dass jede Aufnahmevorrichtungen separat zwischen der Verstauposition und wenigstens einer Gebrauchsposition durch Klappen um eine Achse quer zur Ausziehachse bewegbar ist.

Die erfindungsgemäße Verkippung des wenigstens einen Aufnahmeelements kann über einen Winkel von mehr als 30° bevorzugt mehr als 60° und besonders bevorzugt mehr als 80° reichen. In besonders bevorzugten Ausführungsformen kann die Verkippung im Wesentlichen über einen 90° -Winkel reichen.

Es kann vorgesehen sein, dass die wenigstens eine Aufnahmevorrichtung eine Längserstreckung aufweist, wobei ein Winkel zwischen der Längserstreckung und der Ausziehachse zwischen 45° und 90°, vorzugsweise genau 90°, beträgt.

Durch die mit einem Winkel abstehende Längserstreckung kann eine L-förmige Ausgestaltung der Ausziehvorrichtung vorgenommen werden, wobei das "L" bei einer Überführung zwischen Gebrauchsposition und Verstauposition umgeklappt wird.

Es kann vorgesehen sein, dass die wenigstens eine Aufnahmevorrichtung zusätzlich um eine, vorzugsweise verstellbare, Querachse zur Ausziehachse klappbar mit der wenigstens einen Führungsvorrichtung verbunden ist. Dadurch kann die wenigstens eine Aufnahmevorrichtung in der Gebrauchsposition von der Führungsvorrichtung in einem rechten Winkel abstehen und sich in der Verstauposition an die Führungsvorrichtung anlegen. Dadurch kann in der Verstauposition am oder im Fahrzeug noch mehr Platz gespart werden.

Vorzugsweise ist vorgesehen, dass die wenigstens eine Aufnahmevorrichtung durch Klappen um eine Achse quer zur Ausziehachse in eine Gebrauchsposition überführbar ist, wobei die wenigstens eine Aufnahmevorrichtung durch wenigstens eine Sperrvorrichtung, vorzugsweise wenigstens einen Anschlag, in der Gebrauchsposition gegenüber einer Verkippung lösbar verriegelbar ist.

Es ist erfindungsgemäß vorgesehen, dass die wenigstens eine Aufnahmevorrichtung einen U- oder V-förmigen Abschnitt aufweist, welcher U- oder V-förmige Abschnitt dazu ausgebildet ist, ein Pedal und/oder eine Kurbel des wenigstens einen Fahrrads aufzunehmen.

Durch einen U- oder V-förmigen Abschnitt kann es beispielsweise vorgesehen sein, dass die Aufnahmevorrichtung einen U- oder V-förmigen Ausschnitt aufweist, wobei am Scheitelpunkt des U- oder V-förmigen Ausschnittes ein Pedal oder eine Kurbel des wenigstens einen Fahrrads einrasten kann oder befestigt werden kann, um mit der Trägervorrichtung transportiert werden zu können.

Insbesondere wenn dieser U- oder V-förmige Abschnitt nach oben weist, kann dadurch eine besonders einfache Montage des wenigstens einen Fahrrads ermöglicht werden, wobei das wenigstens einen Fahrrad nur von oben in den U- oder V-förmigen Abschnitt hineingehoben werden kann und dadurch sofort gehalten wird, ohne dass eine montierende Person das Gewicht des Fahrrads weiter halten müsste. Durch die erfindungsgemäße Anordnung der Trägervorrichtung in oder unter einer Stoßstange muss das wenigstens eine Fahrrad gleichzeitig nicht sehr hoch gehoben werden.

Es kann vorgesehen sein, dass die wenigstens eine Aufnahmevorrichtung durch wenigstens eine Höhenverstellung relativ zu der wenigstens einen Befestigungsvorrichtung verstellbar ist.

Durch Vorsehen wenigstens einer Höhenverstellung kann es beispielsweise vorgesehen sein, dass die wenigstens eine Aufnahmevorrichtung, gegenüber der wenigstens einen Befestigungsvorrichtung in einem montierten Zustand an einem Kraftfahrzeug in einer Höhe verstellt werden kann.

Dies kann beispielsweise dazu dienen, dass die wenigstens eine Aufnahmevorrichtung in einer Gebrauchsposition zur Befestigung des wenigstens einen Fahrrads abgesenkt werden kann, sodass der Anwender das Fahrrad nicht zu weit anheben muss. Anschließend kann es vorgesehen sein die wenigstens eine Aufnahmevorrichtung in der Gebrauchsposition mittels der wenigstens eine Höhenverstellung angehoben werden kann, sodass die wenigstens eine Aufnahmevorrichtung (und ein daran beispielsweise befestigtes Fahrrad) insbesondere während des Transportes durch das Kraftfahrzeug eine höhere Position gegenüber einem Untergrund einnimmt.

Vorzugsweise kann vorgesehen sein, dass wenigstens ein Klemmelement zum klemmenden Halten des wenigstens einen Fahrrads vorgesehen ist, vorzugsweise in Form wenigstens einer Halteklaue.

Es kann vorgesehen sein, dass wenigstens eine lösbare Verbindungsvorrichtung, vorzugsweise mindestens ein abnehmbares und/oder klappbares (und somit beispielweise verstaubares) Verbindungsrohr, zum Montieren des wenigstens einen Klemmelementes an der wenigstens einen Aufnahmevorrichtung vorgesehen ist.

Alternativ oder zusätzlich kann auch vorgesehen sein, dass wenigstens ein Klemmelementes klappbar an der wenigstens einen Aufnahmevorrichtung vorgesehen ist, wobei das wenigstens ein Klemmelement in der Gebrauchsposition an das wenigstens eine Fahrrad herangeklappt werden kann und in der Verstauposition an die wenigstens einen Aufnahmevorrichtung und/oder an die wenigstens eine Befestigungsvorrichtung abgeklappt werden.

So kann es beispielsweise vorgesehen sein, dass die Verbindungsvorrichtung eine Ausnehmung beinhaltet, in welcher beispielsweise ein rohr- oder stangenähnliches Element befestigt werden kann, an welchem das Klemmelement angeordnet ist (beispielweise eine Halteklaue).

Es kann vorgesehen sein, dass die wenigstens eine Führungsvorrichtung ineinander geführte Rohre beinhaltet. So kann beispielsweise vorgesehen sein, dass das äußere oder das innere Rohr einen Führungszapfen aufweist, welcher beispielsweise in einer Führungskulisse am anderen Rohr geführt ist, wobei die (beispielsweise L-förmige) Führungskulisse den Zapfen bereits zwischen einer Verstauposition und einer Gebrauchsposition führt, wobei eine Rotationsbewegung beinhaltet ist.

Es kann beispielsweise auch vorgesehen sein, dass die wenigstens eine Führungsvorrichtung nur teilweise ineinander geführte Rohre aufweist, um eine entsprechende Verkippung umzusetzen, wobei ein weiterer ein weiterer Teil der Führungsvorrichtung durch ineinander geführte, vorzugsweise mit rechteckigem Querschnitt ausgebildete, Rohre umgesetzt ist, um die Ausziehbewegung umzusetzen.

Vorzugsweise kann vorgesehen sein, dass die wenigstens eine Führungsvorrichtung wenigstens eine Führungsschiene und wenigstens einen mit der wenigstens einen Führungsschiene kooperierenden Rollkörper aufweist.

Es kann die wenigstens eine Führungsschien oder der wenigstens eine Rollkörper mit der Befestigungsvorrichtung und/oder Aufnahmevorrichtung bewegungsschlüssig in Richtung der Ausziehachse verbunden sein, wobei über eine Relativbewegung zwischen Führungsschien und Rollkörper die Aufnahmevorrichtung gegenüber der Befestigungsvorrichtung zwischen der Verstauposition und der Gebrauchsposition bewegbar ist.

Vorzugsweis kann auch vorgesehen sein, dass wenigstens zwei Führungsschienen und wenigstens ein zwischen den wenigstens zwei Führungsschienen angeordneter Rollkörper, besonders bevorzugt wenigstens ein Wälzkörper, vorgesehen sind. Dabei kann es vorgesehen sein, dass eine der wenigstens zwei Führungsschienen mit der Befestigungsvorrichtung und die andere der wenigstens zwei Führungsschienen mit der Aufnahmevorrichtung bewegungsschlüssig relativ zur Ausziehachse verbunden ist, wobei eine Bewegung der wenigstens zwei Führungsschienen zueinander über den wenigstens einen Rollköper gestattet wird (ähnlich einer Schubladenausziehführung).

Es kann vorgesehen sein, dass wenigstens eine elektrische Verbindungsleitung vorgesehen ist, welche elektrische Verbindungsleitung dazu ausgebildet ist, ein E-Bike mit einer Stromquelle des Kraftfahrzeugs zu verbinden.

Vorzugsweise ist vorgesehen, dass die wenigstens eine Aufnahmevorrichtung gegenüber der wenigstens einen Befestigungsvorrichtung mittels einer Arretiervorrichtung, vorzugsweise wenigstens einer Klemmvorrichtung, in der Verstauposition und/oder in der wenigstens einen Gebrauchsposition, vorzugsweise jeder Gebrauchsposition, arretierbar ist.

Die wenigstens eine Klemmvorrichtung kann beispielsweise wenigstens eine, vorzugsweise durch einen Aktuator betätigte, Klemmbacke aufweisen, wobei durch Kraftbeaufschlagung der wenigstens einen Klemmbacke gegenüber einem korrespondierendem Gegenstück die Aufnahmevorrichtung gegenüber der Befestigungsvorrichtung über eine Klemmkraft (und eine daraus resultierende Reibkraft ähnlich einer Backenbremse) arretierbar ist. der Aktuator zur Betätigung der wenigstens einen Klemmvorrichtung kann beispielsweise elektrisch oder auch hydraulisch betätigt ausgebildet sein.

Es kann auch vorgesehen sein, dass die wenigstens eine Aufnahmevorrichtung gegenüber der wenigstens einen Befestigungsvorrichtung in mehreren Positionen (abgesehen von der Verstauposition und der wenigstens einen Gebrauchsposition) arretierbar ist.

Eine solche Arretiervorrichtung kann beispielsweise auch durch einen Bolzen vorgesehen sein, welcher eine Bewegung der Führungsvorrichtung in der Gebrauchs- oder der Verstauposition verhindert. Alternativ kann es jedoch auch vorgesehen sein, dass die Arretierung durch Endlagen der Führungsvorrichtung gegeben ist. So kann es beispielsweise vorgesehen sein, dass - wenn die Führungsvorrichtung eine Führungskulisse beinhaltet - die Endpositionen bereits eine Arretierung zwischen Befestigungsvorrichtung und Aufnahmevorrichtung hervorrufen.

Es kann vorgesehen sein, dass wenigstens ein Antrieb vorgesehen ist, wobei der wenigstens eine Antrieb dazu ausgebildet ist, die wenigstens eine Aufnahmevorrichtung zwischen der Verstauposition und der wenigstens einen Gebrauchsposition zu bewegen.

Hierzu kann es auch beispielsweise vorgesehen sein, dass die Trägervorrichtung, insbesondere die Antriebseinheit, mit dem Kraftfahrzeugsystem verbunden wird, wobei der wenigstens eine Antrieb über die Bedienung des Kraftfahrzeuges angesteuert werden könnte, um die wenigstens eine Aufnahmevorrichtung zwischen der Verstauposition und der wenigstens einen Gebrauchsposition zu bewegen.

Dies kann beispielsweise durch eine Bedieneinheit im Kraftfahrzeug oder auch eine Funkfernbedienung (ähnlich einer Autofernbedienung für die Zentralverriegelung) durchgeführt werden.

Vorzugsweise ist vorgesehen, dass an einem in der Gebrauchsposition von der wenigstens einen Befestigungsvorrichtung abgewandten Ende der wenigstens einen Aufnahmevorrichtung
- eine Kennzeichenhalterung und/oder
- wenigstens eine Kraftfahrzeugbeleuchtung, und/oder
- wenigstens eine Warnvorrichtung vorgesehen ist.

Durch das Anordnen einer Kennzeichenhalterung an dem abgewandten Ende der wenigstens einen Aufnahmevorrichtung von der Befestigungsvorrichtung kann beispielsweise ein Kennzeichen mit der Trägervorrichtung mitbewegt werden und es ist nicht mehr erforderlich, dieses separat vom Fahrzeug abzunehmen und an einem Fahrradträger anzuordnen. Selbiges gilt natürlich auch für die Fahrzeugbeleuchtung oder eine Warnvorrichtung (wie beispielsweise Katzenaugen).

Ebenfalls wird Schutz begehrt für ein Fahrrad umfassend wenigstens eine Kurbel und/oder wenigstens einen Lenker, wobei das Fahrrad wenigstens eine Feststellvorrichtung aufweist, welche wenigstens eine Feststellvorrichtung dazu ausgebildet ist, die Kurbel und/oder einen Lenker des wenigstens einen Fahrrads verdrehsicher, vorzugsweise bewegungsstarr, lösbar zu arretieren.

Schutz wird ebenfalls begehrt für eine Anordnung einer erfindungsgemäßen Trägervorrichtung und wenigstens einem erfindungsgemäßen Fahrrad.

Weiters wird Schutz begehrt für ein Kraftfahrzeug mit einer erfindungsgemäßen Trägervorrichtung, wobei die Trägervorrichtung über die wenigstens eine Befestigungsvorrichtung am Kraftfahrzeug - vorzugsweise an einem Fahrgestell des Kraftfahrzeugs - angebunden ist.

Vorzugsweise kann dabei vorgesehen sein, dass die Trägervorrichtung in einem in Fahrtrichtung hinteren Bereich des Kraftfahrzeugs angeordnet ist, wobei die wenigstens eine Aufnahmevorrichtung in der Verstauposition der Trägervorrichtung in oder unter eine Stoßstange des Kraftfahrzeuges zurückgezogen ist und in der wenigstens einen Gebrauchsposition von der Stoßstange des Kraftfahrzeugs in Fahrtrichtung beabstandet ist.

In bevorzugten Ausführungsformen kann die Trägervorrichtung in das Fahrzeug integriert sein.

Weitere Beispiele, Vorteile und Einzelheiten der Erfindung sind in den Figuren und der nachstehenden Figurenbeschreibung dargestellt. Darin zeigt
Fig. 1 ein erstes, nicht erfindungsgemäßes, Ausführungsbeispiel einer erfindungsgemäßen Trägervorrichtung,
Fig. 2 eine Draufsicht auf Fig. 1 in der Gebrauchsposition,
Fig. 3 ein weiteres Ausführungsbeispiel einer erfindungsgemäßen Trägervorrichtung,
Fig. 4 eine Detailansicht einer Aufnahmevorrichtung,
Fig. 5 eine Draufsicht auf die Fig. 4,
Fig. 6 eine Ausführungsvariante einer erfindungsgemäßen Trägervorrichtung mit einem Fahrrad
Fig. 7 ein Ausführungsbeispiel einer Führungsvorrichtung,
Fig. 8 ein zweites Ausführungsbeispiel einer erfindungsgemäßen Trägervorrichtung,
Fig. 9 eine Detailansicht einer Aufnahmevorrichtung,
Fig. 10 eine Draufsicht auf die Fig. 9.
Fig. 11 a, b eine Trägervorrichtung an einem Kraftfahrzeug,
Fig. 12 ein weiteres Ausführungsbeispiel einer
   erfindungsgemäßen Trägervorrichtung,
Fig. 13 eine Detailansicht der Fig. 12,
Fig. 14 eine Detailansicht der Fig. 12,
Fig. 15 eine Detailansicht einer Aufnahmevorrichtung,
Fig. 16 eine Detailansicht der Fig. 15,
Fig. 17 eine Detailansicht der Fig. 15,
Fig. 18 ein Ausführungsbeispiel einer Trägervorrichtung,
Fig. 19 ein Ausführungsbeispiel einer Trägervorrichtung,
Fig. 20 ein Ausführungsbeispiel einer Trägervorrichtung,
Fig. 21 ein Ausführungsbeispiel einer Trägervorrichtung,
Fig. 22 ein Ausführungsbeispiel einer Trägervorrichtung,
Fig. 23 eine Detailansicht der Fig. 22,
Fig. 24 ein Ausführungsbeispiel einer Trägervorrichtung,
Fig. 25 ein Ausführungsbeispiel einer Trägervorrichtung,
Fig. 26 eine Detailansicht der Fig. 25, und
Fig. 27 eine Detailansicht der Fig. 25,

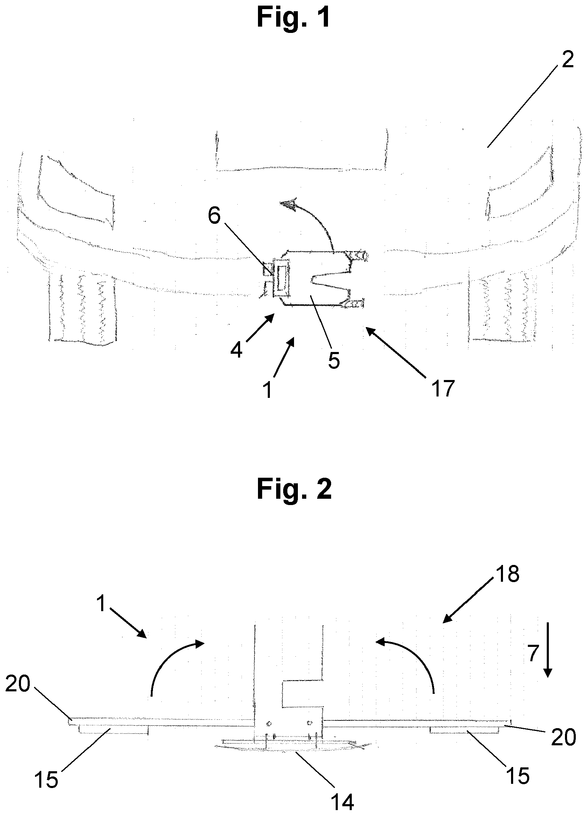

Fig. 1 zeigt ein erstes Ausführungsbeispiel einer nicht erfindungsgemäßen Trägervorrichtung 1 in einer Verstauposition 17, wobei die Trägervorrichtung 1 über ihre Befestigungsvorrichtung 4 an einem Kraftfahrzeug 2 befestigt ist.

Genau genommen ist die Trägervorrichtung 1 in einem in Fahrtrichtung 16 hinteren Bereich des Kraftfahrzeugs 2 angeordnet. Die Aufnahmevorrichtung 5 ist in einer Verstauposition 17 der Trägervorrichtung 1 in eine Stoßstange des Kraftfahrzeugs 2 zurückgezogen.

Über die Führungsvorrichtung 6 der Trägervorrichtung 1 kann die Aufnahmevorrichtung 5 zwischen einer Verstauposition 17 und einer Gebrauchsposition 18 bewegt werden, wobei die Führungsvorrichtung 6 dermaßen ausgebildet ist, dass die Aufnahmevorrichtung 5 gegenüber dem Kraftfahrzeug 2 entlang einer Ausziehachse 7 (welche in diesem Ausführungsbeispiel mit der Fahrrichtung 16 des Kraftfahrzeugs 2 übereinstimmt) in eine Gebrauchsposition 18 ausgezogen wird, wobei die Aufnahmevorrichtung 5 nach dem Ausziehen zwischen der Verstauposition 17 und der Gebrauchsposition 18 durch ein Verkippen um die Ausziehachse 7 bewegbar ist (wie es durch die als Pfeil verdeutlichte Bewegung in Fig. 1 ersichtlich ist).

Die Befestigungsvorrichtung 4 der Trägervorrichtung 1 hält die Trägervorrichtung 1 am Kraftfahrzeug 2 und kann durch eine Verschraubung oder Verschweißung am Fahrgestell des Kraftfahrzeugs 2 angebunden werden.

Die Aufnahmevorrichtung 5 ist dazu ausgebildet, wenigstens ein Fahrrad 3 aufzunehmen, wie in den folgenden Figuren noch näher erläutert wird.

Die Führungsvorrichtung 6 dieses Ausführungsbeispiels ist durch zwei ineinander geführte Rohre ausgebildet, wobei die Aufnahmevorrichtung 5 gegenüber der Befestigungsvorrichtung 4 geführt wird.

Schön ersichtlich ist in dieser Figur, dass durch die Verkippung der Aufnahmevorrichtung 5 in eine Verstauposition 17 diese entlang der Stoßstange des Kraftfahrzeugs 2 "umgelegt" werden kann, sodass sie in der Verstauposition 17 im oder am Fahrzeug weniger Platz einnimmt oder einem Bediener nicht im Weg steht, wenn dieser beispielsweise den Kofferraumdeckel des Kraftfahrzeugs 2 öffnet.

Durch das Verkippen der Aufnahmevorrichtung 5 um die Ausziehachse 7 kann die Aufnahmevorrichtung in einer Gebrauchsposition 18 zur Aufnahme eines Fahrrades 3 positioniert werden.

Fig. 2 zeigt eine Draufsicht auf das Ausführungsbeispiel der Fig. 1, wobei die Trägervorrichtung 1 sich in Fig. 2 in einer Gebrauchsposition 18 befindet.

Weiters ist in Fig. 2 ersichtlich, dass die Trägervorrichtung 1 noch zwei klappbare Signalelemente 20 aufweist, welche in der Gebrauchsposition 18 von der Befestigungsvorrichtung 4 an einem vom Kraftfahrzeug 2 abgewandten Ende der Aufnahmevorrichtung 5 vorgesehen sind.

Diese klappbaren Signalelemente 20 können relativ zur Ausziehachse 7 um 90° aufgeklappt werden (wie durch die Pfeile gekennzeichnet ist) und tragen die Kraftfahrzeugbeleuchtung 15 (beispielsweise Blinker, Rückleuchten oder Bremslichter).

Des Weiteren ist an dem von der Befestigungsvorrichtung 4 abgewandten Ende der Aufnahmevorrichtung 5 eine Kennzeichenhalterung 14 vorgesehen, welche mitsamt der Aufnahmevorrichtung 5 über die Führungsvorrichtung 6 relativ zur Befestigungsvorrichtung 4 ausgezogen und aufgeklappt werden kann.

Die Signalelemente 20 können beim Überführen zwischen der Gebrauchsposition in die Verstauposition (wie durch die Pfeile dargestellt) an die Aufnahmevorrichtung 5 angeklappt werden und mit dieser gemeinsam in den hinteren Bereich des Kraftfahrzeugs (oder auch unter das Kraftfahrzeug) verschoben werden, sodass sie in der Verstauposition 17 für einen Betrachter versteckt sind.

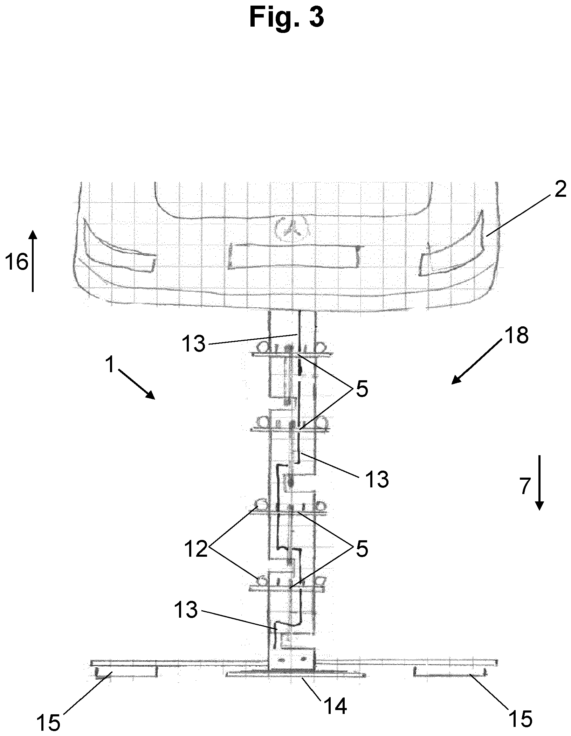

Fig. 3 zeigt ein weiteres Ausführungsbeispiel einer erfindungsgemäßen Trägervorrichtung 1, welche dazu ausgebildet ist, mehrere Fahrräder 3 aufzunehmen, wobei diese Fahrräder 3 jeweils an einer von vier Aufnahmevorrichtungen 5 aufgenommen werden können, wobei in Summe bei diesem Ausführungsbeispiel vier Fahrräder transportiert werden können.

Die vier Aufnahmevorrichtungen 5 sind Teil einer gemeinsamen Tragstruktur, welche die Aufnahmevorrichtungen 5 mit der Führungsvorrichtung 6 verbinden.

Weiters weist jede Aufnahmevorrichtung 5 Verbindungsvorrichtungen 12 auf, welche Klemmelemente 10 zur Befestigung der Fahrräder 3 aufnehmen können (hierzu noch weitere Details in den folgenden Figuren).

Es ist ersichtlich, wie in diesem Ausführungsbeispiel die Fahrtrichtung 16 des Kraftfahrzeugs 2 mit der Ausziehachse 7 der Trägervorrichtung 1 übereinstimmt.

Die Trägervorrichtung 1 dieses Ausführungsbeispiels der Fig. 3 weist eine elektrische Verbindungsleitung 13 auf. Diese elektrische Verbindungsleitung 13 wird dazu genutzt, die Kraftfahrzeugbeleuchtung 15 mit dem Beleuchtungssystem des Kraftfahrzeugs 2 zu verbinden.

Weiters wird diese elektrische Verbindungsleitung 13 dazu genutzt, an der Trägervorrichtung 1 für E-Bikes eine Stromquelle bereitzustellen, die mit der Stromquelle des Kraftfahrzeugs 2 verbunden ist, sodass E-Bikes über die Trägervorrichtung 1 (beispielsweise während des Transportes 10 des E-Bikes) geladen werden können.

Die Aufnahmevorrichtungen 5 dieses Ausführungsbeispiels sind durch eine Arretiervorrichtung in einer Verstauposition 17 und einer Gebrauchsposition 18 arretierbar, wobei es auch beispielsweise vorgesehen sein kann, dass mehrere Gebrauchspositionen 18 vorgesehen sind, sodass immer nur eine Aufnahme für ein Fahrrad 3 aus dem Heck des Kraftfahrzeuges heraussteht, welche für den Einsatz gerade benötigt ist.

So kann es vorgesehen sein, dass die Trägervorrichtung je nach Bedarf nur für ein, zwei, drei oder vier Fahrräder 3 herausgezogen wird und in einer Gebrauchsposition 18 arretiert wird.

Die Arretierung kann beispielsweise durch einen Bolzen erfolgen, welcher eine Bewegung der Führungsvorrichtung 6 hemmt, indem er die ineinander geführten Rohre durch entsprechend angeordnete Bohrungen durchtritt und somit eine Bewegung zwischen Aufnahmevorrichtung 5 und Befestigungsvorrichtung 4 hemmt.

Des Weiteren kann jedoch auch vorgesehen sein, dass ein Antrieb vorgesehen ist, welcher Antrieb die Aufnahmevorrichtung zwischen einer Verstauposition 17 und einer Gebrauchsposition 18 bewegt. Dieser Antrieb kann durch eine Blockade ebenfalls als Arretiervorrichtung genutzt werden.

Jedoch ist es auch vorstellbar, dass die Führungsvorrichtung eine Führungskulisse 25 aufweist, in welcher ein Führungszapfen 26 geführt wird, wobei an den Endlagen (oder auch in Zwischenlagen) der Führungskulisse 25 Arretierpositionen vorgesehen sind, sodass die Aufnahmevorrichtung 5 in einer Gebrauchsposition 18 und einer Verstauposition 17 arretierbar ist.

Die weiteren Details dieser Trägervorrichtung 1 (beispielsweise Kennzeichenhalterung 14, Kraftfahrzeugbeleuchtung 15 oder Signalelemente 20) ähneln denen der bereits erläuterten zu Fig. 2.

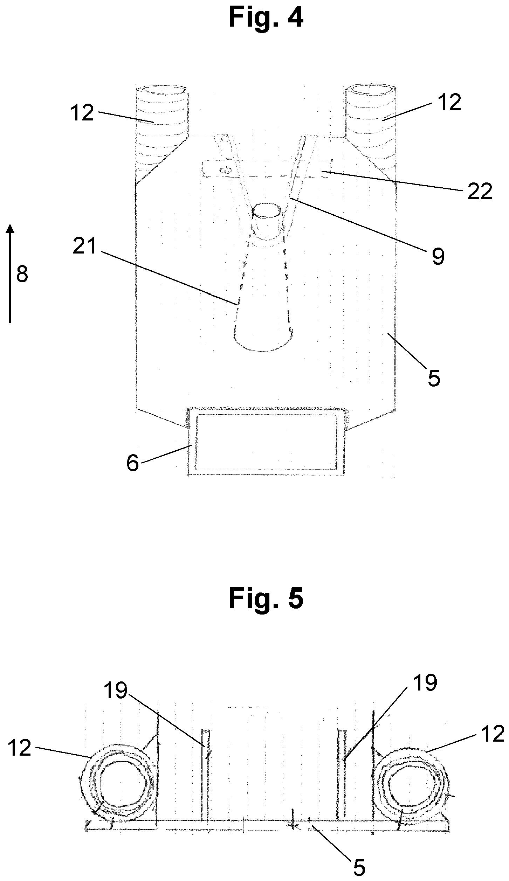

Fig. 4 zeigt im näheren Detail ein Beispiel einer Aufnahmevorrichtung 5 zur Aufnahme eines Fahrrades 3, wobei Fig. 4 eine Ansicht entlang der Ausziehachse 7 der Trägervorrichtung 1 darstellt und Fig. 5 eine Draufsicht auf die Fig. 4.

Diese Aufnahmevorrichtung 5 ist durch eine Verschweißung auf die Führungsvorrichtung 6 der Trägervorrichtung 1 aufgesetzt und erstreckt sich in einem rechten Winkel zu dieser.

Zur Stabilisierung der Aufnahmevorrichtung 5 sind des weiteren Versteifungselementes 19 vorgesehen.

Alternativ könnte es jedoch auch vorgesehen sein, dass die Aufnahmevorrichtung 5 klappbar gegenüber der Führungsvorrichtung 6 (beispielsweise durch Scharniere) ausgebildet ist, sodass die Aufnahmevorrichtung 5 zusätzlich um eine Querachse zur Ausziehachse 7 zwischen der Gebrauchsposition 18 und der Verstauposition 17 umgeklappt werden kann, wobei die Aufnahmevorrichtung 5 in der Gebrauchsposition 18 von der Führungsvorrichtung 6 in einem rechten Winkel absteht und sich in der Verstauposition 17 an die Führungsvorrichtung 6 anlegt. Dadurch kann in der Verstauposition 17 am oder im Fahrzeug noch mehr Platz gespart werden.

Die Aufnahmevorrichtung 5 weist einen V-förmigen Abschnitt 9 auf.

Der V-förmige Abschnitt 9 ist dazu ausgebildet, ein Pedal und/oder eine Kurbel 21 eines Fahrrades 3 aufzunehmen (wie durch die in Fig. 4 strichliert dargestellte Kurbel 21 eines Fahrrades 3 angedeutet ist).

Besonders günstig ist es, wenn das Fahrrad 3 einen Arretiermechanismus aufweist, welcher die Lage der Kurbel 21 relativ zum Fahrrad 3 versperren lässt, sodass durch Befestigung der Kurbel 21 an der Aufnahmevorrichtung 5 der Trägervorrichtung 1 eine Position des Fahrrads 3 gegenüber der Trägervorrichtung 1 gesichert werden kann.

Weiter kann vorgesehen sein, dass das Fahrrad 3 einen Arretiermechanismus aufweist, welcher die Lage des Lenkers des Fahrrades 3 relativ zum Fahrradrahmen versperren lässt, sodass sich das Fahrrad 3 für den Transport mit der Trägervorrichtung 1 in sich arretieren lässt (oder in anderen Worten ausgedrückt: das Fahrrad sich durch Arretieren seiner Gelenksachsen für einen Transport versteifen lässt).

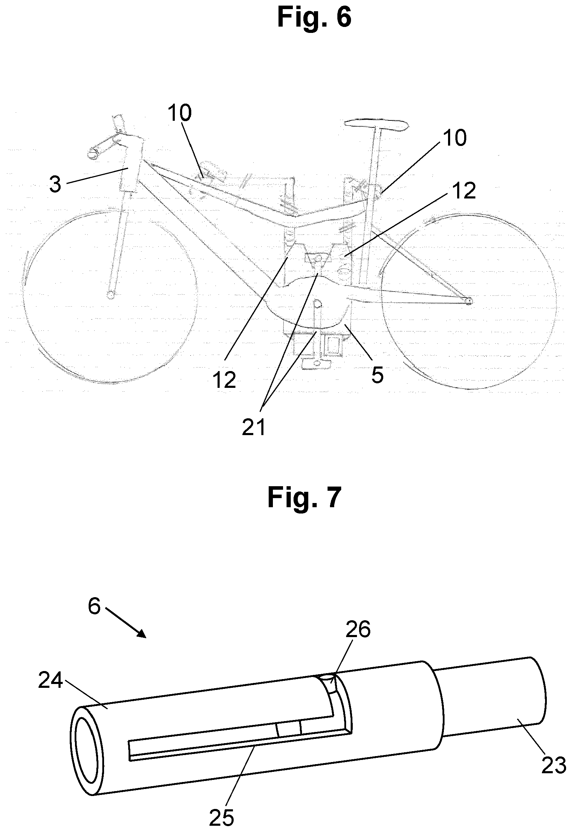

Wenn dies nicht der Fall ist, ist es erforderlich, weiteren Klemmelemente 10 zur Befestigung des Fahrrades 3 vorzusehen. Klemmelemente 10 können an den Verbindungsvorrichtungen 12 der Aufnahmevorrichtung 5 angebracht werden, wie im Weiteren durch Fig. 6 ersichtlich ist.

Diese Kurbel 21 des Fahrrades 3 kann über eine strichliert dargestellte Sperrvorrichtung 22 beispielsweise versperrt werden und das Fahrrad 3 gegen Diebstahl sichern.

Fig. 6 zeigt eine Trägervorrichtung 1 im Einsatz, wobei die Aufnahmevorrichtung 5 ein Fahrrad 3 aufnimmt.

Das Fahrrad 3 wird dabei mit der Kurbel 21 in den V-förmigen Abschnitt 9 der Längserstreckung 8 eingesetzt, wobei die andere Kurbel 21 des Fahrrads 3 ihren Platz in einer Ausnehmung der Führungsvorrichtung 6 / Aufnahmevorrichtung 5 findet (siehe hierzu auch Fig. 3).

Durch Klemmelemente 10, welche mittels der Verbindungsvorrichtungen 12 an der Aufnahmevorrichtung 5 befestigt werden, kann das das Fahrrad 3 zusätzlich klemmend befestigt werden, sodass das Fahrrad 3 in seiner Lage gegenüber der Trägervorrichtung 1 gesichert wird. Die Klemmelemente sind in diesem Ausführungsbeispiel als Halteklauen ausgebildet.

Die Verbindungsvorrichtungen 12 der Aufnahmevorrichtung 5 weisen in diesem Ausführungsbeispiel Verbindungsrohre oder Verbindungsstangen auf, welche in rohrähnlichen Ausnehmungen eingeführt werden können und in diesen Ausnehmungen durch Verklemmung und/oder Vorsehen einer Führungs- oder Arretierkulisse gehalten werden können.

Fig. 7 zeigt ein Ausführungsbeispiel einer Führungsvorrichtung 6 einer erfindungsgemäßen Trägervorrichtung 1, wobei die Führungsvorrichtung 6 zwei ineinander geführte Rohre 23, 24 aufweist.

Das innere Rohr 23 weist dabei einen Führungszapfen 26 auf, welcher formschlüssig mit dem inneren Rohr 23 verbunden ist. Das innere Rohr 23 kann beispielsweise auch als Welle oder Zapfen (massives Bauteil) ausgeführt sein.

Der Führungszapfen 26 des inneren Rohres 23 ist in der Führungskulisse 25 des äußeren Rohres 24 geführt.

Die dargestellte Führungsvorrichtung 6 befindet sich in einer Gebrauchsposition 18.

So ist durch die Führungskulisse 25 ersichtlich, wie ausgehend von der Gebrauchsposition 18 das innere Rohr 23 durch eine Verkippung um die Ausziehachse 7 zuerst verkippt werden muss, um anschließend entlang der Ausziehachse in eine Verstauposition 17 übergeführt werden zu können.

Durch die jeweiligen Endpositionen der Führungskulisse 25 steht der Führungszapfen 26 an, wodurch eine Arretierung in der jeweiligen Position vorgenommen werden kann.

Das innere Rohr 23 kann in einer Montagesituation an einer Tragvorrichtung 1 mit der Befestigungsvorrichtung 4 verbunden werden und das äußere Rohr 24 mit der Aufnahmevorrichtung 5.

Eine solche Ausführungsvariante, wie in Fig. 7 dargestellt, kann beispielsweise entlang einer Ausziehachse 7 an einem dem Kraftfahrzeug 2 zugewandten Ende der Führungsvorrichtung 6 (wie durch die Fig. 1 bis 6 gezeigt) angeordnet sein, wobei die durch die Fig. 1 bis 6 gezeigte mit einem rechteckigen Querschnitt gezeigte Führungsvorrichtung 6 über zwei ineinander geführte Rohre 23, 24 wie durch Fig. 7 gezeigt um eine Ausziehachse 7 gekippt werden kann.

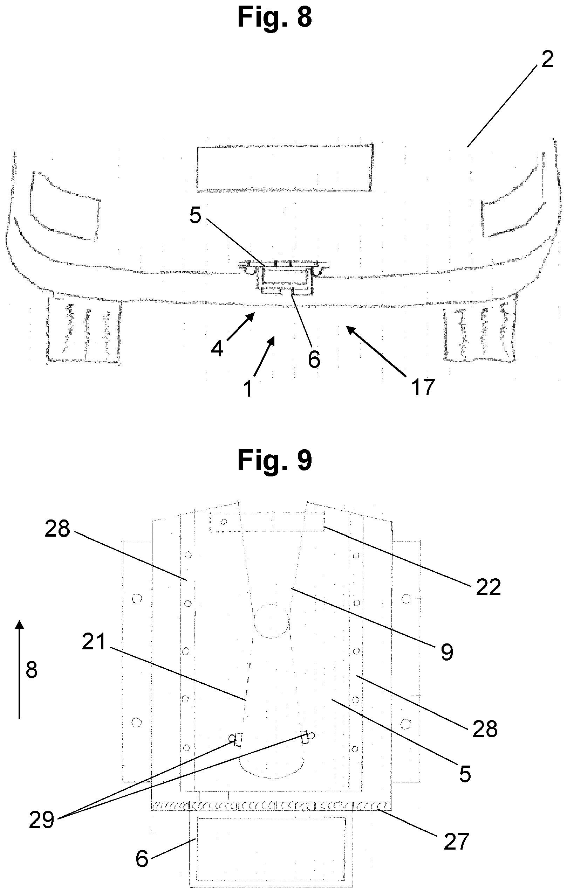

Fig. 8 zeigt ein zweites Ausführungsbeispiel einer Trägervorrichtung 1 in einer Verstauposition 17, wobei die Trägervorrichtung 1 über ihre Befestigungsvorrichtung 4 an einem Kraftfahrzeug 2 befestigt ist.

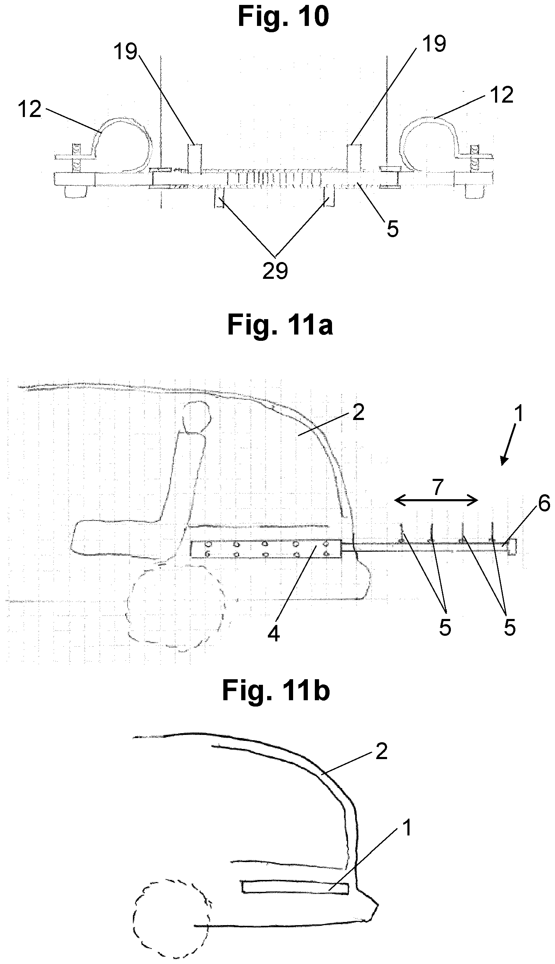

Im Vergleich zur Ausführungsvariante der Fig. 1 kann die Trägervorrichtung 1 der Ausführungsvariante der Fig. 8 mittels der Führungsvorrichtung 6 zwischen einer Verstauposition und einer Gebrauchsposition zusätzlich durch Klappen um eine Querachse quer zur Ausziehachse bewegt werden, wie im Folgenden durch die Figuren 9 und 10 im größeren Detail erklärt werden soll.

Dabei stellt Fig. 9 eine Detailansicht der Aufnahmevorrichtung 5 der Fig. 8 dar und Fig. 10 eine Draufsicht auf die Fig.9.

Es ist durch diese Figuren gut zu erkennen, wie die Aufnahmevorrichtung 5 gegenüber der Führungsvorrichtung 6 über das Scharnier 27 quer zur Ausziehachse 7 geklappt werden kann und somit zwischen einer Gebrauchsposition 18 und einer Verstauposition 17 übergeführt werden kann.

In eine Ausführungsvariante könnte es auch vorgesehen sein, dass eine Ausziehbewegung entlang der Ausziehachse 7 in eine Gebrauchsposition 18 mit der Klappbewegung der Aufnahmevorrichtung quer zur Ausziehachse 7 kinematisch gekoppelt ist, sodass durch die Ausziehbewegung automatisch auch ein Aufklappen der Aufnahmevorrichtung 5 vorgenommen werden kann (dies gilt natürlich auch vice versa für die Einschubbewegung in eine Verstauposition 19). Eine solche kinematische Koppelung der Bewegungen ist beispielsweise durch ein Koppelgetriebe ausführbar.

Um das Aufkippen in der Gebrauchsposition 18 zu begrenzen, sind die Versteifungselemente 19 vorgesehen, an welchen die Aufnahmevorrichtung 5 in der Gebrauchsposition ansteht und somit arretiert wird.

Des Weiteren weist die Ausgestaltung der Fig. 9 eine Höhenverstellung 28 auf, welche durch zwei Führungsschienen umgesetzt ist.

Durch diese Höhenverstellung kann die Aufnahmevorrichtung 5 in ihrer Längserstreckung an ein zu transportierendes Fahrrad 3 angepasst werden, wobei je nach Höhe der Fahrradkurbel 21 der V-förmige Abschnitt 9 der Aufnahmevorrichtung 5 angepasst werden kann.

Des Weiteren weist dieses Ausführungsbeispiel der erfindungsgemäßen Trägervorrichtung 1 im Gegensatz zu dem der Fig. 4 zwei Verbindungsvorrichtungen 12 auf, welche durch Klemmschellen umgesetzt sind.

Die in Fig. 9 und 10 dargestellte Aufnahmevorrichtung 5 weist des Weiteren eine Haltevorrichtung 29 auf, welche dazu ausgebildet ist, eine Kurbel 21 des Fahrrads 3 an der Aufnahmevorrichtung 5 zu halten.

Diese Haltevorrichtung 29 kann beispielsweise an eine nach untenstehende Kurbel 21 des Fahrrades angebunden werden, sodass die Kurbel 21 (und somit das Fahrrad 3) lösbar mit der Haltevorrichtung verbunden wird.

Eine entsprechende Haltevorrichtung 21 kann beispielsweise durch einen Bolzen ausgeführt sein, welche in eine entsprechende Ausnehmung an der Kurbel 21 des Fahrrads 3 eingreift. Jedoch sind auch andere formschlüssige oder kraftschlüssige Haltevorrichtungen 21 durchaus denkbar. So könnte es alternativ oder zusätzlich vorgesehen sein, dass die Kurbel 21 des Fahrrads 3 über Spannelemente (z. B. Spanngurte oder Spannschnüre) an der Aufnahmevorrichtung 5 gehalten wird, wobei die Spannelemente über die Haltevorrichtungen 29 (beispielsweise als Ösen ausgebildet) angebunden werden.

Vorteilhafterweise kann es auch vorgesehen sein, dass das Fahrrad 3 einen Arretiermechanismus aufweist, welcher die Lage der Kurbel 21 des Fahrrades 3 relativ zum Fahrradrahmen versperren lässt, sodass sich das Fahrrad 3 für den Transport mit der Trägervorrichtung 1 in sich arretieren lässt (oder in anderen Worten ausgedrückt: das Fahrrad sich durch Arretieren seiner Gelenksachsen für einen Transport versteifen lässt).

Die verbleibenden Merkmale entsprechen denen der bereits zuvor erläuterten Trägervorrichtung 1.

Fig. 11a zeigt ein Ausführungsbeispiel einer Trägervorrichtung 1 im montierten Zustand an einem Kraftfahrzeug 2, wobei die Trägervorrichtung 1 im Heckbereich, genauer gesagt unter einem Ladeboden des Kofferraums des Kraftfahrzeugs 2, über die Befestigungsvorrichtung 4 angeordnet ist und sich in der Gebrauchsposition 18 befindet.

Die Trägervorrichtung 1 dieses Ausführungsbeispiels weist eine Befestigungsvorrichtung 4 zur Befestigung am Kraftfahrzeug auf.

Über die Führungsvorrichtung 6 ist entlang der Ausziehachse 7 die Trägervorrichtung zwischen einer Gebrauchsposition 18 und einer Verstauposition 17 bewegbar (über Rollkörper 32).

In einer Verstauposition 17 dieses Ausführungsbeispiels ist dabei die Trägervorrichtung, genauer gesagt die Aufnahmevorrichtungen 5 und die Führungsvorrichtungen6, vollständig im Heckbereich des Kraftfahrzeugs 2 versenkt. Über das Herausziehen der Aufnahmevorrichtungen 5 über die Führungsvorrichtung 6, entlang der Ausziehachse 7, kann die Trägervorrichtung in eine Gebrauchsposition 18 übergeführt werden, wobei die Aufnahmevorrichtungen 5 bei ausgezogener Führungsvorrichtung 6 um eine Achse quer zur Ausziehachse 7 aufgeklappt werden können, um ein Fahrrad 3 aufzunehmen.

Wie durch diese Fig. 11 ersichtlich ist, kann eine Länge der Führungsvorrichtung 6 und eine Anzahl der Aufnahmevorrichtungen 5, je nach Verlängerung der Trägervorrichtung 1, vergrößert werden, wobei mehrere Aufnahmevorrichtungen 5 vorgesehen werden können, wenn das Kraftfahrzeug 2 einen längeren Aufnahmebereich für die Trägervorrichtung 1 zu bieten hat.

Es kann auch vorgesehen sein, dass die Aufnahmevorrichtungen 5 entlang der Ausziehachse noch weiter ausgezogen werden, als sie in der Gebrauchsposition 18 einnehmen, sodass ein Fahrrad 3 auf den Aufnahmevorrichtungen 5 verharren kann, wenn ein Kofferraumdeckel des Kraftfahrzeugs 2 geöffnet wird.

Fig. 11b zeigt das Ausführungsbeispiel der Fig. 11a in der Verstauposition 17.

Die Tragvorrichtung 1 kann an beliebiger Position zwischen Fahrzeugunterboden und Ladekante des Kofferraums angeordnet sein.

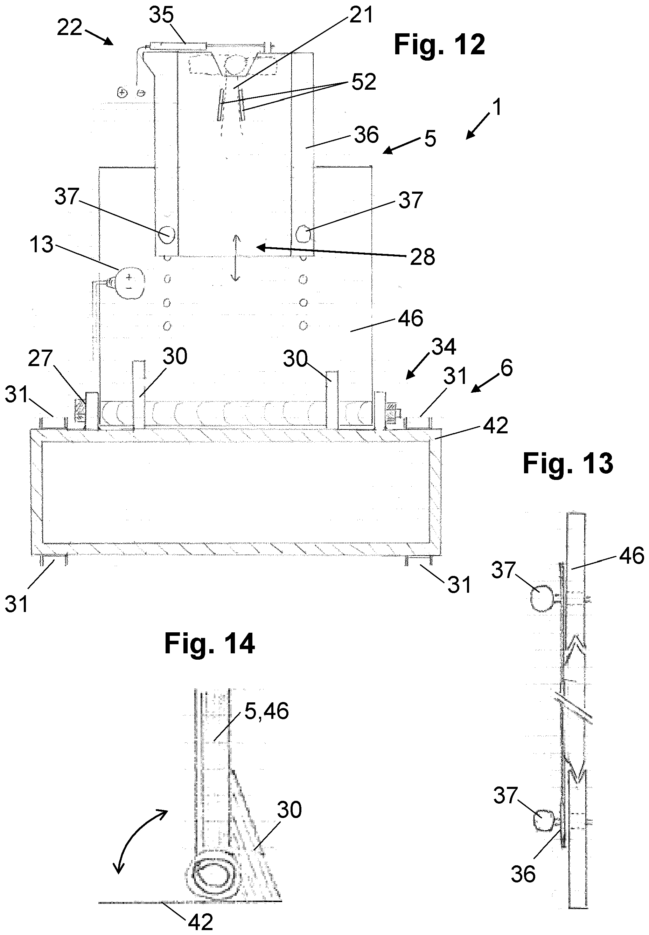

Fig. 12 zeigt eine nähere Ausführungsform der Aufnahmevorrichtung 5.

Die Führungsvorrichtung 6 zum Führen der Aufnahmevorrichtung 5 verfügt in diesem Ausführungsbeispiel über einen Trägerkörper 42, welcher über die Führungsschienen 31, entlang der Ausziehachse 7, bewegbar ist.

Am Trägerkörper 42 ist die Aufnahmevorrichtung 5 über das Scharnier 27 gelagert, wobei die Aufnahmevorrichtung 5 gegenüber dem Trägerkörper 42 der Führungsvorrichtung 6 um eine Kippachse 35 quer zur Ausziehachse 7 verkippt werden kann und somit in eine Gebrauchsposition 18 übergeführt werden kann.

Die Gebrauchsposition 18 der Aufnahmevorrichtung 5 wird eingenommen, wenn durch die Verkippung quer zur Ausziehachse 7 die Aufnahmevorrichtung 5 mittels der an der Aufnahmevorrichtung 5 befestigten Anschläge 30 am Trägerkörper 42 der Führungsvorrichtung 6 anschlagen und somit eine um 90° arretierte Position gegenüber dem Trägerkörper 42 einnehmen (wie durch Fig. 14 ersichtlich ist).

Die Aufnahmevorrichtung 5 des Ausführungsbeispiels der Fig. 12 weist eine Höhenverstellung 28 auf, wobei der V-förmige Abschnitt 9 zur Aufnahme einer Kurbel 21 eines Fahrrads 3 gegenüber dem Trägerkörper 42 in seinem Abstand verstellt werden kann, um auf unterschiedliche Fahrradgrößen eingestellt werden zu können.

Diese Höhenverstellung 28 geschieht durch eine Verstellung zwischen der Halteplatte 36 (welche die Kurbel 21 des Fahrrads 3 aufnimmt) gegenüber der Grundplatte 46 (welche über das Scharnier 27 am Trägerkörper 42 befestigt ist) der Aufnahmevorrichtung 5.

Diese Einstellung der Halteplatte 36 gegenüber der Grundplatte 46 geschieht über eine Verstellung mittels der Bolzen 37, welche die Halteplatte 36 mit der Grundplatte 46 verbinden.

Für diese Verbindung über die Bolzen 37 sind Bohrungen an der Grundplatte 46 angeordnet, welche ein Raster aufweisen, um verschiedene Höheneinstellungen der Halteplatte 36 zu ermöglichen.

Bezüglich dieser Befestigung mittels der Bolzen 37 der Halteplatte 36 mit der Grundplatte 46 sei auch auf die Fig. 13 verwiesen, welche eine Draufsicht auf die Fig. 12 darstellt.

Die Halteplatte 36 weist des Weiteren einen elektrisch betätigten Aktuator 34 auf, welcher dazu ausgebildet ist, den Aufnahmebereich für die gestrichelt angedeutete Kurbel 21 des Fahrrads 3 zu verschließen und/oder freizugeben, wenn die Kurbel 21 des Fahrrads 3 im Aufnahmebereich positioniert oder entnommen wird. Dieser elektrisch betätigte Aktuator 34 stellt somit die Sperrvorrichtung 22 dieses Ausführungsbeispiels dar. Der Aktuator 34 ist in diesem Fall als sogenannter Elektrozylinder ausgebildet.

Schräg angeordnet sind außerdem optional Haltekörper 52 vorgesehen, welche allfällige Wippbewegungen der Kurbel 21 und/oder des gesamten Fahrrades 3 unterdrücken.

Des Weiteren weist die Ausführungsvariante der Fig. 12 eine elektrische Verbindungsvorrichtung 13 auf, wobei beispielsweise Elektrofahrräder (E-Bikes) wenn sie an der Trägervorrichtung 1 ihren Platz einnehmen, geladen werden könnten.

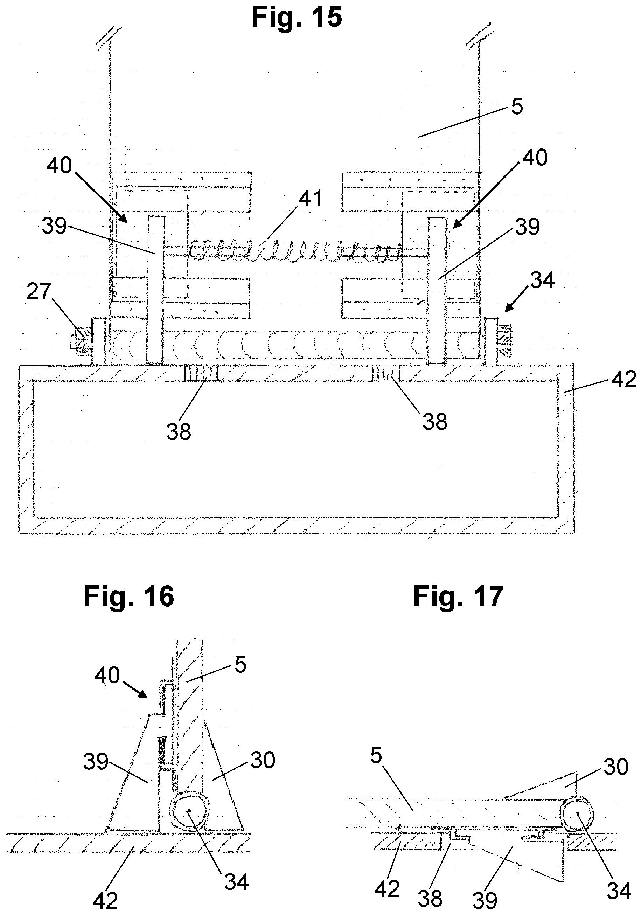

Fig. 15-17 zeigen ein Ausführungsbeispiel, bei welchem bei einer Verkippung der Aufnahmevorrichtung 5 gegenüber der Führungsvorrichtung 6 (Trägerkörper 42) quer zur Ausziehachse 7 eine Arretierung vorgenommen werden kann.

So wird zunächst (wie bereits in den vorhergehenden Figuren beschrieben) die Aufnahmevorrichtung 5 über die Scharniere 27 aufgeklappt, bis die an der Aufnahmevorrichtung 5 vorgesehenen Anschläge 30 am Trägerkörper 42 in Kontakt treten.

Um eine Rückkippung der Aufnahmevorrichtung 5 zu verhindern, sind die weiteren Anschläge 39 vorgesehen, welche an der Aufnahmevorrichtung 5 über die Schwalbenschanzführung 40 gelagert sind.

Des Weiteren sind die weiteren Anschläge 39 miteinander durch das Federelement 41 gekoppelt.

In einer Verstauposition, wenn die Aufnahmevorrichtung 5 an den Trägerkörper 42 angeklappt ist, finden die weiteren Anschläge 39 in den Ausnehmungen 38 (wie in Fig. 17 gezeigt) ihren Platz und lassen somit eine vollständige Anklappung der Aufnahmevorrichtung 5 an den Trägerkörper 42 zu.

Wenn nun die Aufnahmevorrichtung 5 quer zur Ausziehachse 7 verklappt wird, werden die weiteren Anschläge 39, sobald sie die Ausnehmung 38 verlassen, über das Federelement 41 voneinander distanziert, sodass die Anschläge 39 mit der Oberfläche des Trägerkörpers 42 in Kontakt treten und somit die Aufnahmevorrichtung 5 beidseitig gegenüber einer Verkippung um die Kippachse 35 sichern (wie durch Fig. 16 gezeigt ist).

Wenn nun die Aufnahmevorrichtung 5 wieder in eine Verstauposition bewegt werden soll, können die weiteren Anschläge 39 aneinandergedrückt werden, wodurch das Federelement 41 verspannt wird und die weiteren Anschläge 39 wieder in die Ausnehmungen 38 eintreten können.

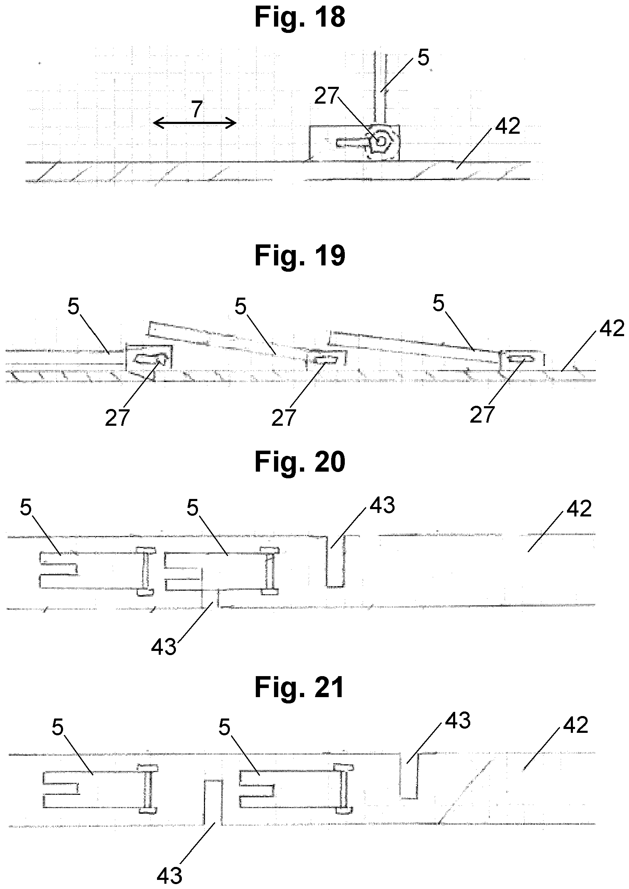

Die Fig. 18-21 zeigen verschiedene Ausführungsvarianten mehrerer Aufnahmevorrichtungen 5 an einem Trägerkörper 42 der Führungsvorrichtung 6, wobei die Aufnahmevorrichtungen 5 gegenüber der Führungsvorrichtung 6 mittels eines Scharniers 27 quer zur Ausziehachse 7 kippbar angeordnet sind.

Es könnte beispielsweise wie in Fig. 19 gezeigt eine Anordnung dermaßen erfolgen, dass sich die Aufnahmevorrichtungen 5 in einer Verstauposition leicht überlappen, wodurch an Länge der Trägervorrichtung 1 eingespart werden kann, jedoch die Höhenabmessung zunimmt.

Weiters kann der Abstand der Aufnahmevorrichtungen 5 zueinander individuell unterschiedlich ausgeführt sein, wie durch die Fig. 20 und 21 gezeigt ist, wodurch individuell auf eine Kurbelbreite eines Fahrrads 3 eingegangen werden kann, um auch breitere oder dünnere Fahrräder platzsparend und unkompliziert auf der Trägervorrichtung 1 aufnehmen zu können.

Weiters ist ersichtlich, wie die Aufnahmevorrichtung 5 stets ein Ende der Kurbel aufnimmt, wo hingegen die Kurbelaufnahme 43 im Trägerkörper 42 der Führungsvorrichtung 6 die andere Kurbel aufnimmt.

Diese Kurbelaufnahme 43 ist durch einen entsprechenden Schlitz im Trägerkörper 42 ausgebildet, wobei die eine Kurbel des Fahrrads in der Kurbelaufnahme 43 ihren Platz findet und die andere Kurbel des Fahrrads 3 an der Aufnahmevorrichtung 5.

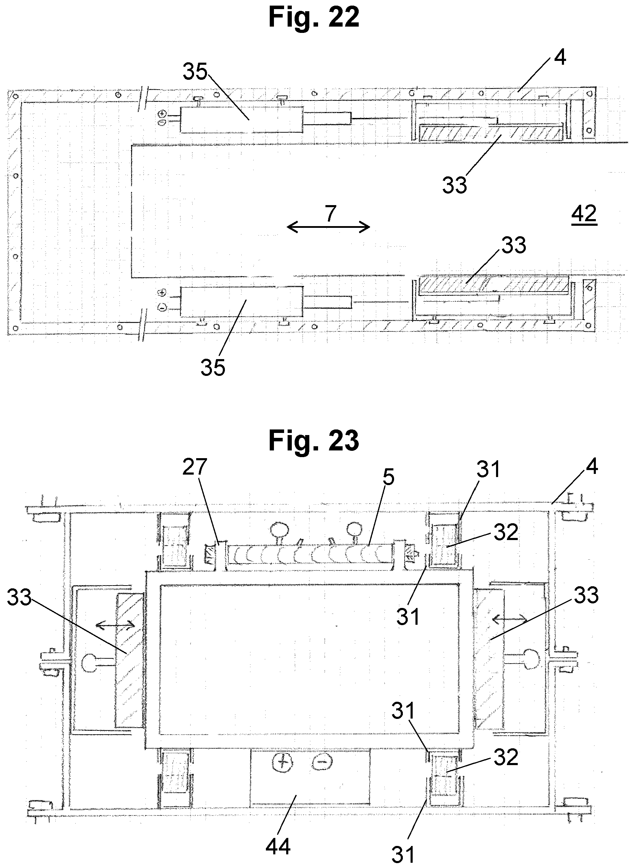

Die Fig. 22 und 23 zeigen die Trägervorrichtung 1 mit ihrer Befestigungsvorrichtung 4 und der Führungsvorrichtung 6 in einer Detailansicht.

Die Befestigungsvorrichtung 4 dieses Ausführungsbeispiels bildet einen Kasten, welcher die Führungsvorrichtung 6 und die Aufnahmevorrichtung 5 in einer Verstauposition 17 aufnehmen.

Die Befestigungsvorrichtung 4 kann über Befestigungsschrauben, Bolzen, Verschweißungen oder dergleichen mit dem Fahrzeug 2 in Verbindung gebracht werden.

Die Führungsvorrichtung 6 dieses Ausführungsbeispiels weist Führungsschienen 31 auf (siehe Fig. 23) wobei jeweils eine Führungsschiene an der Befestigungsvorrichtung 4 angeordnet ist und die andere Führungsschiene 31 an einem Trägerkörper 42, an welchem die Aufnahmevorrichtungen 5 gelagert sind.

Zwischen den Führungsschienen 31 sind Rollkörper 32 angeordnet, sodass eine Relativbewegung der zwei Führungsschienen und somit der Aufnahmevorrichtungen 5 gegenüber der Befestigungsvorrichtung 4 zugelassen wird.

Folglich kann der Trägerkörper 42 entlang der Ausziehachse 7, unter Zuhilfenahme der Führungsschienen 31 und der Rollkörper 32, geführt werden, um die Aufnahmevorrichtungen zwischen einer Gebrauchsposition 18 und einer Verstauposition 17 zu bewegen.

Um die Aufnahmevorrichtungen 5 entlang der Ausziehachse 7 arretieren zu können, ist eine Arretiervorrichtung vorgesehen, welche durch die Klemmvorrichtung 33 umgesetzt ist.

Diese Klemmvorrichtung 33 kann über elektrisch betätigte Aktuatoren 34 an den Trägerkörper 42 angepresst werden, wodurch über eine Reibkraft eine Verklemmung des Trägerköpers 42 mit der Befestigungsvorrichtung 4 (ähnlich einer Backenbremse) umsetzt wird.

Durch diese Klemmvorrichtung 33 wird die Möglichkeit geschaffen, die Aufnahmevorrichtungen 5 entlang der Ausziehachse 7 gegenüber dem Befestigungskörper 4 frei wählbar, in verschiedenen Positionen zu arretieren.

Im vorliegenden Ausführungsbeispiel kann beispielsweise ein sogenannter Elektrozylinder als Aktuator 34 eingesetzt werden, der die Klemmbacken über einen Hebel an die Aufnahmevorrichtung drückt. In einer arretierten Stellung kann der Elektrozylinder gesperrt werden, sodass zum Klemmen nicht ständig Energie aufgewendet werden muss.

Des Weiteren ist in Fig. 23 ein Schacht 44 zu erkennen, über welchen die elektrisch betätigten Aktuatoren und/oder andere elektrische Verbraucher der Trägervorrichtung 1 ihre Stromzufuhr bzw. ihre elektrische Verschaltung erlangen können.

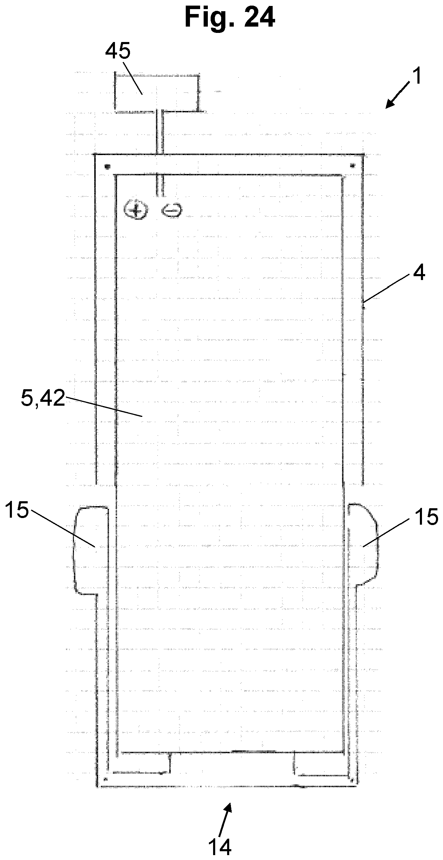

So können beispielsweise die elektrisch betätigten Aktuatoren 34 oder an der Trägervorrichtung 1 angeordnete Fahrzeugbeleuchtungen 15 über den Schacht 44 und/oder Kabelbaum 45 der Trägervorrichtung 1 verbunden werden, wie beispielsweise durch Fig. 24 gezeigt ist.

Dieser Kabelbaum 45 kann bei Anordnung in einem Kraftfahrzeug 2 mit einem elektrischen System des Kraftfahrzeugs gekoppelt werden, sodass die Aktuatoren eine E-Bike Anschlussmöglichkeit oder die Kraftfahrzeug-beleuchtung 15 der Trägervorrichtung 1 durch das elektrische Kraftfahrzeugsystem und den Kabelbaum 45 versorgen können.

Fig. 24 zeigt eine Draufsicht auf ein Ausführungsbeispiel einer Trägervorrichtung 1, wobei sich die Trägervorrichtung 1 in einer Verstauposition 17 befindet.

Hierbei ist der Trägerkörper 42 der Führungsvorrichtung 6 und die Aufnahmevorrichtungen 5 in die kastenförmig ausgebildete Befestigungsvorrichtung 4 eingeschoben.

Die Kraftfahrzeugbeleuchtungen 15 sind seitlich eingeklappt und ebenfalls in die Befestigungsvorrichtung 4 eingezogen.

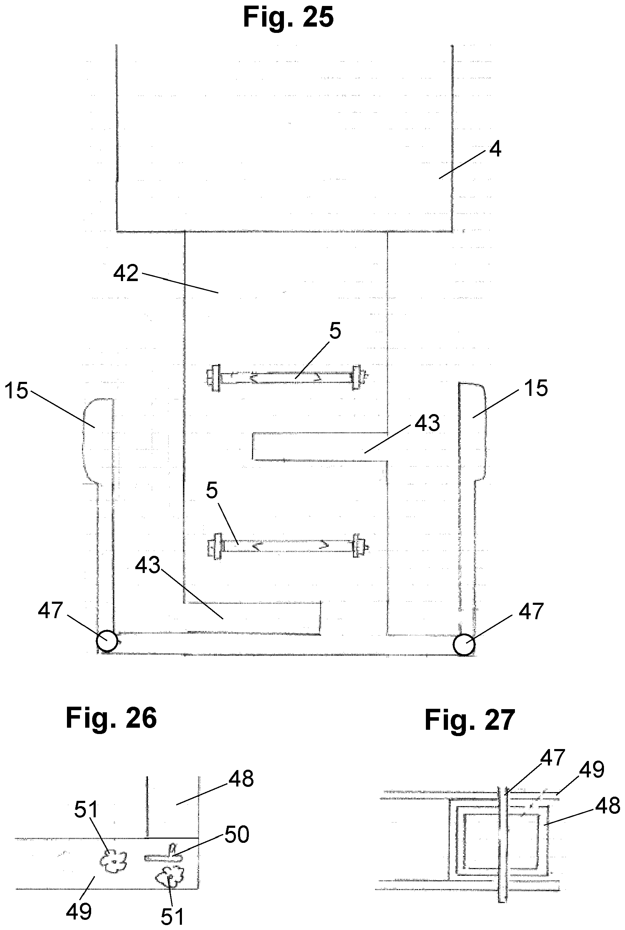

Wenn nun über die Führungsvorrichtung 6 die Aufnahmevorrichtungen 5 entlang der Ausziehachse 7 aus der Befestigungsvorrichtung 4 herausgezogen werden und in eine Gebrauchsposition 18 übergeführt werden, können die Aufnahmevorrichtungen 5 quer zur Ausziehachse 7 verkippt werden, wie beispielsweise durch Fig. 25 gezeigt ist.

Die Kraftfahrzeugbeleuchtungen 15 können über die Drehpunkte 47 ausgeschwenkt werden, um in eine Gebrauchsposition übergeführt zu werden.

Es wird dabei beim Ausklappen der Kraftfahrzeug-beleuchtungen 15 ein innen liegendes Rohr 48, an welchem die Kraftfahrzeugbeleuchtungen 15 angeordnet sind, über einen als Drehpunkt 47 dienenden Bolzen gegenüber einem am Trägerkörper 42 der Führungsvorrichtung 6 angeordneten außen liegenden Rohr 49 bewegt, wobei sich der als Drehpunkt 47 dienende Bolzen in einer Führungskulisse 50 des außen liegenden Rohres 49 bewegt, wie durch die Fig. 26 und 27 zu erkennen ist.

Um das außen liegende Rohr 49 mit dem innen liegenden Rohr 48 in verschiedenen Positionen arretieren zu können sind Befestigungsschrauben 51 vorgesehen, welche durch Anziehen und Lösen eine Klemmung zwischen dem außen liegenden Rohr 49 und dem innen liegenden Rohr 48 hervorrufen können.

### Bezugszeichenliste:

- 1: Trägervorrichtung
- 2: Kraftfahrzeug
- 3: Fahrrad
- 4: Befestigungsvorrichtung
- 5: Aufnahmevorrichtung
- 6: Führungsvorrichtung
- 7: Ausziehachse
- 8: Längserstreckung
- 9: V-förmiger Abschnitt
- 10: Klemmelement
- 11: Halteklaue
- 12: Verbindungsvorrichtung
- 13: Elektrische Verbindungsvorrichtung
- 14: Kennzeichenhalterung
- 15: Kraftfahrzeugbeleuchtung
- 16: Fahrtrichtung
- 17: Verstauposition
- 18: Gebrauchsposition
- 19: Versteifungselement
- 20: Signalelement
- 21: Kurbel des Fahrrades
- 22: Sperrvorrichtung
- 23: Inneres Rohr
- 24: äußeres Rohr
- 25: Führungskulisse
- 26: Bolzen
- 27: Scharnier
- 28: Höhenverstellung
- 29: Haltevorrichtung
- 30: Anschlag
- 31: Führungsschiene
- 32: Rollkörper
- 33: Klemmvorrichtung
- 34: Kippachse quer zur Ausziehachse
- 35: elektrisch betätigter Aktuator
- 36: Halteplatte
- 37: Bolzen
- 38: Ausnehmung
- 39: weiterer Anschlag
- 40: Schwalbenschwanzführung
- 41: Federelement
- 42: Trägerkörper der Führungsvorrichtung
- 43: Kurbelaufnahme
- 44: Schacht
- 45: Kabelbaum
- 46: Grundplatte
- 47: Drehpunkt
- 48: innenliegendes Rohr
- 49: außenliegendes Rohr
- 50: Führungskulisse
- 51: Befestigungsschrauben
- 52: Haltekörper

## Patentansprüche

1. Trägervorrichtung für ein Kraftfahrzeug (2) zur Befestigung wenigstens eines Fahrrads (3), umfassend:
- wenigstens eine Befestigungsvorrichtung (4) zur Anbindung der Trägervorrichtung (1) an das Kraftfahrzeug (2),
- wenigstens eine relativ zur Befestigungsvorrichtung (4) bewegbare Aufnahmevorrichtung (5) zur Aufnahme des wenigstens einen Fahrrads (3) und
- wenigstens eine Führungsvorrichtung (6), wobei die wenigstens eine Aufnahmevorrichtung (5) mittels der wenigstens einen Führungsvorrichtung (6) in Richtung einer Ausziehachse (7) der Trägervorrichtung (1) relativ zur wenigstens einen Befestigungsvorrichtung (4) zwischen einer Verstauposition (17) und wenigstens einer Gebrauchsposition (18) führbar ist, wobei
die wenigstens eine Aufnahmevorrichtung (5) mittels der wenigstens einen Führungsvorrichtung (6) zwischen der Verstauposition (17) und der wenigstens einen Gebrauchsposition (18) zusätzlich durch Klappen um eine Achse quer zur Ausziehachse (7) bewegbar ist,
wobei die wenigstens eine Aufnahmevorrichtung (5) einen U- oder V- förmigen Abschnitt (9) aufweist, welcher U- oder V- förmigen Abschnitt (9) dazu ausgebildet ist, ein Pedal und/oder eine Kurbel des wenigstens einen Fahrrads (3) aufzunehmen.

2. Trägervorrichtung nach Anspruch 1, wobei die wenigstens eine Aufnahmevorrichtung (5) eine Längserstreckung (8) aufweist, wobei ein Winkel zwischen der Längserstreckung (8) und der Ausziehachse (7) zwischen 45° und 90°, vorzugsweise genau 90°, beträgt.

3. Trägervorrichtung nach Anspruch 1 oder 2, wobei die wenigstens eine Aufnahmevorrichtung (5) zusätzlich um eine, vorzugsweise verstellbare, Querachse zur Ausziehachse (7) klappbar mit der wenigstens einen Führungsvorrichtung (6) verbunden ist.

4. Trägervorrichtung nach wenigstens einem der vorhergehenden Ansprüche, wobei die wenigstens eine Aufnahmevorrichtung (5) durch Klappen um eine Achse quer zur Ausziehachse (7) in eine Gebrauchsposition überführbar ist, wobei die wenigstens eine Aufnahmevorrichtung (5) durch wenigstens eine Sperrvorrichtung, vorzugsweise wenigstens einen Anschlag (30), in der Gebrauchsposition (18) gegenüber einer Verkippung lösbar verriegelbar ist.

5. Trägervorrichtung nach wenigstens einem der vorangegangenen Ansprüche, wobei wenigstens ein Klemmelement (10) zum klemmenden Halten des wenigstens einen Fahrrads (3) vorgesehen ist, vorzugsweise in Form wenigstens einer Halteklaue.

6. Trägervorrichtung nach Anspruch 5, wobei wenigstens eine lösbare Verbindungsvorrichtung (12) vorzugsweise mindestens abnehmbares und/oder klappbares Verbindungsrohr, zum Montieren des wenigstens einen Klemmelements (10) an der wenigstens einen Aufnahmevorrichtung (5) vorgesehen ist.

7. Trägervorrichtung nach wenigstens einem der vorangegangenen Ansprüche, wobei die wenigstens eine Führungsvorrichtung (6) ineinander geführte Rohre (23, 24) beinhaltet.

8. Trägervorrichtung nach wenigstens einem der vorangegangenen Ansprüche, wobei die wenigstens eine Führungsvorrichtung (6) wenigstens eine Führungsschiene (31) und wenigstens einen mit der wenigstens einen Führungsschiene (31) kooperierenden Rollkörper (32) aufweist.

9. Trägervorrichtung nach wenigstens einem der vorangegangenen Ansprüche, wobei wenigstens eine elektrische Verbindungsleitungen (13) vorgesehen ist, welche elektrische Verbindungsleitungen (13) dazu ausgebildet sind, ein e-Bike mit einer Stromquelle des Kraftfahrzeugs (2) zu verbinden.

10. Trägervorrichtung nach wenigstens einem der vorangegangenen Ansprüche, wobei die wenigstens eine Aufnahmevorrichtung (5) gegenüber der wenigstens einen Befestigungsvorrichtung (4) mittels einer Arretiervorrichtung, vorzugsweise wenigstens einer Klemmvorrichtung (33) in der Verstauposition (17) und/oder der wenigstens einen Gebrauchsposition (18), vorzugsweise jeder Gebrauchsposition (18), arretierbar ist.

11. Trägervorrichtung nach wenigstens einem der vorangegangenen Ansprüche, wobei wenigstens ein Antrieb vorgesehen ist, wobei der wenigstens eine Antrieb dazu ausgebildet ist, die wenigstens eine Aufnahmevorrichtung (5) zwischen der Verstauposition (17) und der wenigstens einen Gebrauchsposition (18) zu bewegen.

12. Trägervorrichtung nach wenigstens einem der vorangegangenen Ansprüche, wobei an einem in der Gebrauchsposition (18) von der wenigstens einen Befestigungsvorrichtung (4) abgewandten Ende der wenigstens einen Aufnahmevorrichtung (5)
- eine Kennzeichenhalterung (14) und/oder
- wenigstens eine Kraftfahrzeugbeleuchtung (15) und/oder
- wenigstens eine Warnvorrichtung vorgesehen ist.

13. Anordnung mit einer Trägervorrichtung (1) nach wenigstens einem der Ansprüche 1 bis 12 und wenigstens einem Fahrrad (3), wobei das Fahrrad (3) wenigstens eine Kurbel (21) und/oder wenigstens einen Lenker, sowie wenigstens eine Feststellvorrichtung aufweist, welche wenigstens eine Feststellvorrichtung dazu ausgebildet ist, die Kurbel (21) und/oder einen Lenker des wenigstens einen Fahrrads (3) verdrehsicher, vorzugsweise bewegungsstarr, lösbar zu arretieren.

14. Kraftfahrzeug mit einer Trägervorrichtung (1) nach wenigstens einem Ansprüche 1 bis 12, wobei die Trägervorrichtung (1) über die wenigstens eine Befestigungsvorrichtung (4) am Kraftfahrzeug (2) - vorzugsweise an einem Fahrgestell des Kraftfahrzeugs (2) - angebunden ist.

15. Kraftfahrzeug nach dem vorangegangenen Anspruch, wobei die Trägervorrichtung (1) in einem in Fahrtrichtung (16) hinteren Bereich des Kraftfahrzeuges (2) angeordnet ist, wobei die wenigstens eine Aufnahmevorrichtung (5) in der Verstauposition (17) der Trägervorrichtung (1) in und/oder unter eine Stoßstange des Kraftfahrzeuges (2) zurückgezogen ist und in der wenigstens einen Gebrauchsposition (18) von der Stoßstange des Kraftfahrzeuges (2) in der Fahrtrichtung (16) beabstandet ist.

## Claims

1. A supporting device for a motor vehicle (2) for attaching at least one bicycle (3), comprising:
- at least one attachment device (4) for fastening the supporting device (1) to the motor vehicle (2),
- at least one receiving device (5) movable relative to the attachment device (4) for receiving the at least one bicycle (3), and
- at least one guiding device (6), wherein the at least one receiving device (5) is transferable by means of the at least one guiding device (6) in a direction of an extraction axis (7) of the supporting device (1) relative to the at least one attachment device (4) between a storage position (17) and at least one operating position (18), wherein
the at least one receiving device (5) is additionally movable by means of the at least one guiding device (6) between the storage position (17) and the at least one operating position (18) by folding about an axis transverse to the extraction axis (7),
wherein the at least one receiving device (5) has a U-shaped or V-shaped section (9), the U-shaped or V-shaped section (9) being designed to receive a pedal and/or a crank of the at least one bicycle (3).

2. The supporting device according to claim 1, wherein the at least one receiving device (5) has a longitudinal extension (8), wherein an angle between the longitudinal extension (8) and the extraction axis (7) is between 45° and 90°, preferably exactly 90°.

3. The supporting device according to claim 1 or 2 , wherein the at least one receiving device (5) is additionally connected to the at least one guiding device (6) such that it can be folded about a, preferably adjustable, transverse axis relative to the extraction axis (7).

4. The supporting device according to at least one of the preceding claims, wherein the at least one receiving device (5) is transferable into an operating position by folding about an axis transverse to the extraction axis (7), wherein the at least one receiving device (5) can be releasably locked against tilting in the operating position (18) by at least one locking device, preferably at least one stop (30).

5. The supporting device according to at least one of the preceding claims, wherein at least one clamping element (10) is provided for clampingly holding the at least one bicycle (3), preferably in the form of at least one holding claw.

6. The supporting device according to claim 5, wherein at least one detachable connection device (12), preferably at least a removable and/or foldable connection tube, is provided for installing the at least one clamping element (10) on the at least one receiving device (5).

7. The supporting device according to at least one of the preceding claims, wherein the at least one guiding device (6) includes tubes (23, 24) guided into one another.

8. The supporting device according to at least one of the preceding claims, wherein the at least one guiding device (6) has at least one guide rail (31) and has at least one rolling body (32) cooperating with the at least one guide rail (31).

9. The supporting device according to at least one of the preceding claims, wherein at least one electrical connection line (13) is provided, which electrical connection line (13) is designed to connect an e-bike to a power source of the motor vehicle (2).

10. The supporting device according to at least one of the preceding claims, wherein the at least one receiving device (5) can be fixed relative to the at least one attachment device (4) by means of a fixing device, preferably at least one clamping device (33) in the storage position (17) and/or the at least one operating position (18), preferably any operating position (18).

11. The supporting device according to at least one of the preceding claims, wherein at least one drive is provided, wherein the at least one drive is designed to move the at least one receiving device (5) between the storage position (17) and the at least one operating position (18).

12. The supporting device according to at least one of the preceding claims, wherein
- a licence plate holder (14) and/or
- at least one vehicle lighting (15) and/or
- at least one warning device
is provided at an end of the at least one receiving device (5) facing away from the at least one attachment device (4) in the operating position (18).

13. An arrangement comprising a supporting device (1) according to at least one of claims 1 to 12 and at least one bicycle (3), wherein the bicycle (3) has at least one crank (21) and/or at least one handlebar, as well as at least one securing device, which at least one securing device is designed to releasably secure the crank (21) and/or a handlebar of the at least one bicycle (3) such that it cannot rotate, preferably such that it cannot move.

14. A motor vehicle with a supporting device (1) according to at least one of claims 1 to 12, wherein the supporting device (1) is fastened to the motor vehicle (2) - preferably to a chassis of the motor vehicle (2) - via the at least one attachment device (4).

15. The motor vehicle according to the preceding claim, wherein the supporting device (1) is arranged in a rear region of the motor vehicle (2) in the direction of travel (16), wherein the at least one receiving device (5) is retracted into and/or under a bumper of the motor vehicle (2) in the storage position (17) of the supporting device (1) and is spaced apart from the bumper of the motor vehicle (2) in the direction of travel (16) in the at least one operating position (18).

## Revendications

1. Dispositif de support pour un véhicule automobile (2) destiné à la fixation d'au moins une bicyclette (3), comprenant :
- au moins un dispositif de fixation (4) destiné à relier le dispositif de support (1) au véhicule automobile (2),
- au moins un dispositif de réception (5) mobile par rapport au dispositif de fixation (4) pour recevoir l'au moins une bicyclette (3), et
- au moins un dispositif de guidage (6), l'au moins un dispositif de réception (5) pouvant être guidé au moyen de l'au moins un dispositif de guidage (6) dans la direction d'un axe d'extraction (7) du dispositif de support (1) par rapport à l'au moins un dispositif de fixation (4) entre une position de rangement (17) et au moins une position d'utilisation (18),
l'au moins un dispositif de réception (5) pouvant être déplacé au moyen de l'au moins un dispositif de guidage (6) entre la position de rangement (17) et l'au moins une position d'utilisation (18) en plus par rabattement autour d'un axe transversal à l'axe d'extraction (7), l'au moins un dispositif de réception (5) présentant une section en forme de U ou de V (9), laquelle section en forme de U ou de V (9) est conçue pour recevoir une pédale et/ou une manivelle de l'au moins une bicyclette (3).

2. Dispositif de support selon la revendication 1, dans lequel l'au moins un dispositif de réception (5) présente une extension longitudinale (8), un angle entre l'extension longitudinale (8) et l'axe d'extraction (7) étant compris entre 45° et 90°, de préférence exactement 90°.

3. Dispositif de support selon la revendication 1 ou 2, dans lequel l'au moins un dispositif de réception (5) est en outre relié à l'au moins un dispositif de guidage (6) de manière à pouvoir être rabattu autour d'un axe transversal, de préférence réglable, par rapport à l'axe d'extraction (7).

4. Dispositif de support selon au moins l'une des revendications précédentes, dans lequel l'au moins un dispositif de réception (5) peut être transféré par rabattement autour d'un axe transversal à l'axe d'extraction (7) dans une position d'utilisation, l'au moins un dispositif de réception (5) pouvant être verrouillé de manière amovible dans la position d'utilisation (18) par au moins un dispositif de verrouillage, de préférence au moins une butée (30), par rapport à un basculement.

5. Dispositif de support selon au moins l'une des revendications précédentes, dans lequel au moins un élément de serrage (10) est prévu pour maintenir par serrage l'au moins une bicyclette (3), de préférence sous la forme d'au moins une griffe de maintien.

6. Dispositif de support selon la revendication 5, dans lequel au moins un dispositif de liaison amovible (12) est prévu, de préférence au moins un tube de liaison amovible et/ou rabattable, pour monter ledit au moins un élément de serrage (10) sur ledit au moins un dispositif de réception (5).

7. Dispositif de support selon au moins l'une des revendications précédentes, dans lequel ledit au moins un dispositif de guidage (6) comprend des tubes (23, 24) guidés l'un dans l'autre.

8. Dispositif de support selon au moins l'une des revendications précédentes, dans lequel l'au moins un dispositif de guidage (6) présente au moins un rail de guidage (31) et au moins un corps de roulement (32) coopérant avec l'au moins un rail de guidage (31).

9. Dispositif de support selon au moins l'une des revendications précédentes, dans lequel il est prévu au moins une ligne de connexion électrique (13), laquelle ligne de connexion électrique (13) est conçue pour connecter un vélo électrique à une source d'énergie du véhicule automobile (2).

10. Dispositif de support selon au moins l'une des revendications précédentes, dans lequel l'au moins un dispositif de réception (5) peut être bloqué par rapport à l'au moins un dispositif de fixation (4) au moyen d'un dispositif d'arrêt, de préférence au moins un dispositif de serrage (33), dans la position de rangement (17) et/ou dans l'au moins une position d'utilisation (18), de préférence dans chaque position d'utilisation (18).

11. Dispositif de support selon au moins l'une des revendications précédentes, dans lequel au moins un entraînement est prévu, l'au moins un entraînement étant conçu pour déplacer l'au moins un dispositif de réception (5) entre la position de rangement (17) et l'au moins une position d'utilisation (18).

12. Dispositif de support selon au moins l'une des revendications précédentes, dans lequel, à une extrémité de l'au moins un dispositif de réception (5) opposée à l'au moins un dispositif de fixation (4) dans la position d'utilisation (18)
- un support d'immatriculation (14), et/ou
- au moins un éclairage de véhicule (15), et/ou
- au moins un dispositif d'avertissement est prévu.

13. Agencement comprenant un dispositif de support (1) selon au moins l'une des revendications 1 à 12 et au moins une bicyclette (3), la bicyclette (3) présentant au moins une manivelle (21) et/ou au moins un guidon, ainsi qu'au moins un dispositif de blocage, lequel au moins un dispositif de blocage étant conçu pour bloquer de manière amovible la manivelle (21) et/ou un guidon de l'au moins une bicyclette (3) sans possibilité de rotation, de préférence sans possibilité de mouvement.

14. Véhicule automobile avec un dispositif de support (1) selon au moins l'une des revendications 1 à 12, le dispositif de support (1) étant relié au véhicule automobile (2) - de préférence à un châssis du véhicule automobile (2) - par l'intermédiaire de l'au moins un dispositif de fixation (4).

15. Véhicule automobile selon la revendication précédente, dans lequel le dispositif de support (1) est disposé dans une zone arrière du véhicule automobile (2) dans le sens de la marche (16), l'au moins un dispositif de réception (5) étant, dans la position de rangement (17) du dispositif de support (1), rétracté dans et/ou sous un pare-chocs du véhicule automobile (2) et, dans l'au moins une position d'utilisation (18), éloigné du pare-chocs du véhicule automobile (2) dans le sens de la marche (16).
